# DEMANDE DE BREVET EUROPEEN

(11) **EP 0 625 454 A1**
(43) Date de publication de la demande: **23.11.1994**
(21) Numéro de dépôt: 94107182.1
(22) Date de dépôt: 07.05.1994
(51) Int. Cl.: B60S 1/40

(54) **Dispositif d'essuie-glace comportant une attache de liaison et attache de liaison pour un tel dispositif**

(30) Priorité: 17.05.1993 FR 9305928
(71) Demandeur: VALEO SYSTEMES D'ESSUYAGE, 78180 Montigny-Le-Bretonneux (FR)
(72) Inventeur: Teindas, Jean-Louis, F-63190 Ravel (FR)
(74) Mandataire: Gamonal, Didier

(57) **Abrégé**

La présente invention concerne un dispositif d'essuie-glace, du type comportant un bras d'essuie-glace et un balai d'essuyage fixé à l'une des extrémités du bras d'essuie-glace de façon amovible par l'intermédiaire d'une attache de liaison comportant un logement pour le bras d'essuie-glace ainsi que des moyens d'articulation coopérant avec des moyens d'accrochage complémentaires prévus sur le balai d'essuie-glace, ladite attache de liaison étant déformable élastiquement pour être mise en place entre les joues latérales de la partie médiane de l'étrier principal, caractérisé en ce que l'attache de liaison est constituée par deux parois latérales (6,7) déformables élastiquement réunies, du coté de l'engagement du bras d'essuie-glace, par un pontet (8) et, du coté opposé, par une paroi transversale (9), les parois latérales (6, 7) présentant chacune sur la surface intérieure une saillie (12) pour coopérer avec le crochet prévu à l'extrémité du bras d'essuie-glace, et sur la face extérieure une protubérance (10) pour coopérer avec le balai d'essuie-glace.

## Description

La présente invention concerne un dispositif d'essuie-glace, du type comportant un bras d'essuie-glace et un balai d'essuyage fixé à l'une des extrémités du bras d'essuie-glace de façon amovible par l'intermédiaire d'une attache de liaison.

On connaît dans l'état de la technique différents types d'attaches de liaison. En particulier, le brevet français n° 2297754 décrit une attache de liaison déformable élastiquement pour être mise en place entre les joues latérales de la partie médiane de l'étrier principal.

Pour enclencher l'attache de liaison selon ce document de l'art antérieur, on exerce une pression latérale sur l'attache et on l'introduit dans la fenêtre prévue dans la partie médiane de l'étrier principal du balai d'essuie-glace.

Il est toutefois apparu que la pression latérale exercée sur l'attache de liaison provoque la rupture des bras transversaux, ce qui rend l'attache de liaison inutilisable.

De plus, les attaches de liaison de l'art antérieure sont spécifiques à un type de bras et à un type de balai d'essuie-glace.

L'objet de la présente invention est de remédier à cet inconvénient en proposant une attache de liaison universelle, susceptible d'être mise en oeuvre avec différents types de bras d'essuie-glace et/ou différentes types de balais, et présentant une résistance accrue aux déformations exercées latéralement pour la mise en place entre les joues de l'étrier principal du balai d'essuie-glace.

A cet effet, l'invention concerne un dispositif d'essuie-glace comportant une attache de liaison constituée par deux parois latérales déformables élastiquement réunies, du coté de l'engagement du bras d'essuie-glace, par un pontet et, du coté opposé, par une paroi transversale, les parois latérales présentant chacune sur la surface intérieure une saillie pour coopérer avec le crochet prévu à l'extrémité du bras d'essuie-glace, et sur la face extérieure une protubérance pour coopérer avec le balai d'essuie-glace.

Avantageusement, le pontet relie le bord supérieur des parois latérales. Le pontet contribue au positionnement du bras dans l'attache de liaison.

Avantageusement, les parois latérales sont constituées par une flasque d'une hauteur au moins égale à section du crochet du bras d'essuie-glace, ledit flasque présentant les saillies et protubérances, prolongé par un nez dont le bord supérieur est dans l'alignement du bord supérieure de la flasque et dont la hauteur est inférieure à la hauteur de la flasque.

L'invention sera mieux comprise à la lecture de la description qui suit, faisant référence aux dessins annexés où:
- la figure 1 représente une vue schématique d'un dispositif d'essuie-glace ;
- la figure 2 représente une vue en perspective de l'attache selon l'invention ;
- la figure 3 représente une vue de face de l'attache selon l'invention ;
- la figure 4 représente une vue de dessus de l'attache selon l'invention ;
- la figure 5 montre une vue de face partielle d'une variante de l'attache selon l'invention.

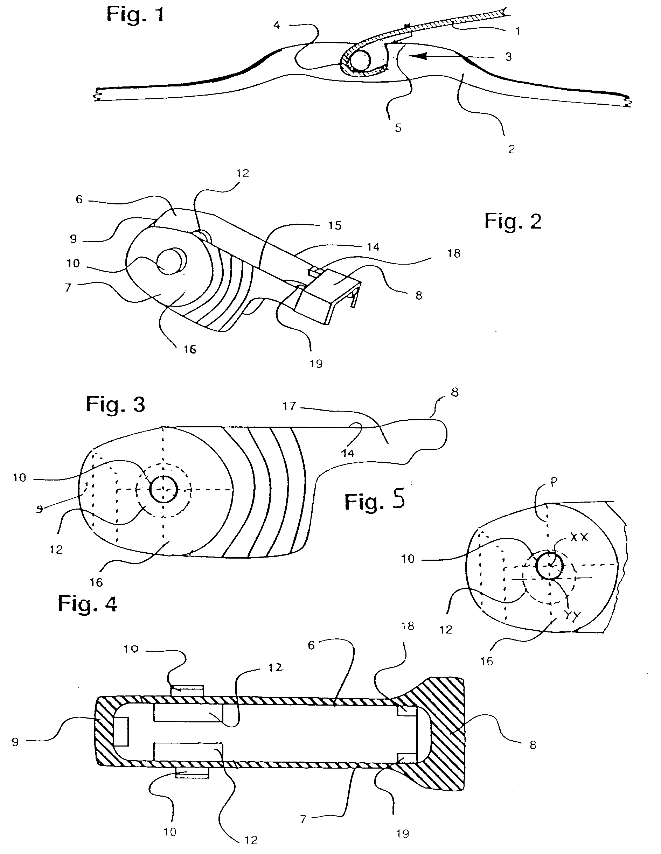

Le dispositif d'essuie-glace représenté de façon schématique, en vue de coupe, en figure 1 comporte un bras 1 et un balai d'essuie-glace dont l'étrier principal 2 est relié au bras 1 par l'intermédiaire d'une attache de liaison 3.

L'extrémité du bras 1 est recourbé en forme de crochet 4. Cette extrémité en forme de crochet permet l'articulation 5 de l'étrier principal 2, et par conséquent du balai d'essuie-glace, par l'intermédiaire de l'attache de liaison 3. A cet effet, l'étrier principal 2 présente une fenêtre 5 permettant l'introduction de l'extrémité en forme de crochet 4 et de l'attache 3.

L'attache de liaison 3 est généralement constituée par une pièce en matière plastique présentant une cavité pour la mise en place de l'extrémité en forme de crochet 4.

La figure 2 représente une vue en perspective d'un exemple de réalisation d'une attache de liaison selon l'invention.

Cette attache de liaison est constituée par deux flasques latérales 6, 7 reliées à l'une des extrémités par un pontet 8 et à l'autre extrémité par une paroi transversale 9.

Les parois latérales 6, 7 présentent sur la face extérieure une protubérance extérieure de section sensiblement circulaire 10. Cette protubérance 10 constitue l'articulation avec les joues de l'étrier principal, joues situées au niveau de la fenêtre 5. La section des protubérances extérieures 10 correspond sensiblement à la section intérieure des perçages prévus dans les joues latérales de l'étrier principal 2.

La surface intérieure des parois latérales 6, 7 présente une saillie sensiblement circulaire 12 dont la section correspond à la courbure de l'extrémité du bras en forme de crochet 4.

Comme mieux visible sur les figures, les protubérances 10 de chaque flasque 6,7 sont coaxiales l'une avec l'autre, ces protubérances étant également coaxiales avec les saillies 12 qui sont elles aussi coaxiales entre elles.

Les figures 3 et 4 représentent respectivement une vue de face et une vue de dessus de l'attache selon l'invention.

Les parois latérales 6, 7 présentent au niveau des protubérances et des saillies un flanc 16 dont la hauteur est au moins égale à la hauteur du crochet 4, ce flanc se prolongeant dans une direction opposée au crochet par un nez 17 de moindre hauteur.

Le pontet 8 relie les bords supérieurs 14, 15 des nez 17 des parois latérales 6, 7. Il s'étend perpendiculairement aux parois latérales 6, 7. De même, les flancs 16 des parois latérales 6, 7 sont reliés par une paroi transversale 9 en avant des protubérances 10 et saillies 12 et l'élasticité des parois latérales 6, 7 , et de la paroi transversale 9 permettent l'introduction de l'attache de liaison ente les joues de l'étrier principal. On exerce à cet effet une pression sur les deux parois latérales 6, 7, perpendiculairement à leur surface. La déformation résultant de cette pression permet d'introduire les protubérances extérieures 10 dans le logement prévu à cet effet sur l'étrier principal. Lorsque l'attache est mise en place sur le balai, on le met en place sur le bras en introduisant le crochet 4 autour des saillies intérieures 12.

L'attache présente au niveau du pontet 8 des cales latérales 18, 19 faisant saillie intérieurement par rapport aux parois latérales 6, 7 le long des bords supérieurs 14, 15. Ces cales 18, 19 sont destinées à immobiliser l'attache avec le bras 1.

On se réfère maintenant à la figure 5 qui montre une variante selon laquelle l'axe X-X passant par les protubérances 10 prévues sur chaque flasque 6,7 est différent de l'axe Y-Y passant par les saillies 12.

Comme visible sur cette figure, l'axe Y-Y est décalé vers le bas par rapport à l'axe X-X tout en étant dans le même plan transversal P passant par les axes X-X et Y-Y'.

Grâce à cette disposition, il peut être prévu d'utiliser des bras de plusieurs épaisseurs, sans que ceux-ci nuisent à la bonne fonctionnalité du dispositif ou à l'esthétisme de celui-ci.

Bien entendu, l'invention n'est pas limitée aux exemples de réalisations décrits dans ce qui précède, et l'Homme de Métier sera à même de réaliser des variantes sans pour autant sortir du cadre de l'invention.

## Revendications

1. Dispositif d'essuie-glace, du type comportant un bras d'essuie-glace (1) et un balai d'essuyage (2) fixé à l'une des extrémités du bras d'essuie-glace de façon amovible par l'intermédiaire d'une attache de liaison (3) comportant un logement pour le bras d'essuie-glace ainsi que des moyens d'articulation coopérant avec des moyens d'accrochage complémentaires prévus sur le balai d'essuie-glace, ladite attache de liaison étant déformable élastiquement pour être mise en place entre les joues latérales de la partie médiane de l'étrier principal, caractérisé en ce que l'attache de liaison (3) est constituée par deux parois latérales (6,7) déformables élastiquement réunies, du coté de l'engagement du bras d'essuie-glace, par un pontet (8) et, du coté opposé, par une paroi transversale (9), les parois latérales (6, 7) présentant chacune sur la surface intérieure une saillie (12) pour coopérer avec le crochet (4) prévu à l'extrémité du bras d'essuie-glace, et sur la face extérieure une protubérance (10) pour coopérer avec le balai d'essuie-glace (2).

2. Dispositif d'essuie-glace, selon la revendication 1, caractérisé en ce que le pontet (8) relie le bord supérieur des parois latérales (6, 7).

3. Dispositif d'essuie-glace, selon l'une quelconque des revendications précédentes, caractérisé en ce que les parois latérales (6, 7) sont constituées par un flasque d'une hauteur au moins égale à section du crochet (4) du bras d'essuie-glace, ledit flasque présentant les saillies et protubérances, prolongé par un nez (17).

4. Dispositif d'essuie-glace, selon l'une quelconque des revendications précédentes, caractérisé en ce que la distance entre l'axe des saillies et protubérances (10,12) et le pontet (8) est sensiblement supérieure à la distance entre ledit axe et la parois transversale (9).

5. Dispositif d'essuie-glace selon l'une des revendications précédentes, caractérisé en ce que les saillies (12) et les protubérances (10) sont coaxiales.

6. Dispositif d'essuie-glace selon l'une des revendications 1 à 4, caractérisé en ce que l'axe (X-X) des protubérances (10) est différent de l'axe (Y-Y) des saillies (12).

7. Attache de liaison pour dispositif d'essuie-glace, caractérisée en ce qu'elle est constituée par deux parois latérales (6, 7) déformables élastiquement réunies du coté de l'engagement du bras d'essuie-glace par un pontet (8) et du coté opposé par une paroi transversale, les parois latérales (6, 7) présentant chacune sur la surface intérieure une saillie (12) pour coopérer avec un crochet (4) prévu à l'extrémité du bras d'essuie-glace (1), et sur la face extérieure une protubérance (10) pour coopérer avec le balai (1).
